# EUROPEAN PATENT SPECIFICATION

(11) **EP 3 244 114 B1**
(45) Date of publication and mention of the grant of the patent: **30.01.2019**
(21) Application number: 16168737.1
(22) Date of filing: 09.05.2016
(51) Int. Cl.: F16L 37/23, F16L 37/34, F16K 25/00, F16L 37/36, F16L 37/12, F16L 37/33

(54) **INTEGRATED FLUSH-FACE CARTRIDGE**
INTEGRIERTE FLACHABDICHTENDE KARTUSCHE
CARTOUCHE FLUSH-FACE INTÉGRÉE

(43) Date of publication of application: 15.11.2017
(73) Proprietor: Faster S.p.A., 26027 Rivolta D'Adda (IT)
(72) Inventor: DANELLI, Alessandro, 24053 BRIGNANO GERA D'ADDA (IT); SORBI, Roberto, 26027 RIVOLTA D'ADDA (IT)
(74) Representative: Lualdi, Lorenzo

(56) References cited:
- EP-A2- 1 260 752
- GB-A- 2 147 074
- US-B1- 6 341 803

## Description

### FIELD OF THE INVENTION

The present invention relates to a quick cartridge coupling, that is of the type suitable for being inserted into a support block which may house a plurality of quick couplings.

More specifically, cartridge couplings of the type considered herein, as mentioned, intended to be inserted into a support block, are generally female couplings which may be interfaced with Standard ISO 7241-compliant male couplings commonly used in the agricultural field.

The present invention relates to a quick cartridge coupling, more specifically to a female coupling, suitable for being inserted into a support block, or "manifold", and which allows the connection of Standard ISO 16028-compliant male couplings, known in the field as flush-face couplings.

### BACKGROUND ART

Systems are known in the field, which allow the manual coupling between a support block, also called "manifold", which generally houses a plurality of female cartridge couplings, and one or more hydraulic lines, provided with corresponding male couplings of the type suitable for being connected to said female cartridges.

Standard ISO 7241 is the reference standard for cartridge couplings employed in the agricultural field. Such a standard establishes certain dimensional and functional parameters of the coupling.

Female couplings of the type considered herein are called "cartridge" couplings because the operation thereof requires them to be completely integrated in the seat specifically provided inside a support block, or manifold, and this is because the flow of oil occurs in a non-axial manner with respect to the coupling, and therefore the support block is involved in the flow itself.

More specifically, the axial flow from the male coupling axially flows into the female cartridge coupling and is then diverted radially to be directed by a channel specifically provided in the manifold.

Generally, a lever which can be operated manually by the operator to decompress any residual pressure in the couplings is provided on blocks or manifolds of type known from the background art. Cartridges indeed generally comprise a decompression system, in turn comprising actuation means arranged at the back of the coupling, that is in the opposite area with respect to the front area for connecting the coupling itself, in accordance with that known from the background art.

As mentioned, a limitation affecting known solutions consists of the fact that cartridges suitable for being supported by a block or manifold only allow the connection with Standard ISO 7241-compliant male couplings due to the structure thereof.

Known cartridges, and the related blocks, therefore do not consist of a versatile system.

Further examples of quick cartridge couplings according to the prior art are known from prior art documents US 6341803, EP 1260752 and GB 2147074.

### SUMMARY

It is the object of the present invention to overcome the versatility limitations of systems known from the background art.

Within the scope of such a task, it is the object of the present invention to provide a device adapted to being inserted into a support block or manifold, which allows the connection of hydraulic lines with flush-face male couplings, that is Standard ISO 16028-compliant.

It is also the object of the present invention to provide a female cartridge coupling of the type which can be inserted into a support block or manifold and capable of being coupled to a flush-face male coupling.

It is also the object of the present invention to provide a female cartridge coupling, which although it is of the type which can be inserted into a flush-face male coupling, has the following functionalities:
- the push-pull connection system;
- the break-away functionality;
- it can also be coupled in the presence of residual pressure on the cartridge side;
- it can be coupled with any type of Standard ISO 16028-compliant male, as long as it is provided with a pressure discharge system on the male side;
- mechanical lock of the cartridge value during the connection step;
- system for releasing the mechanical lock which allows keeping a given residual pressure in the male part in the event of disconnection in the presence of residual pressure in the cartridge.

This task and these and other objects which will become more apparent hereinafter are achieved by a female cartridge coupling according to the appended claims, which form an integral part of the present description.

### LIST OF THE DRAWINGS

Further features and advantages of the present invention will become more apparent from the following detailed description, provided by way of non-limiting example and illustrated in the accompanying drawings, in which:
figure 1 shows a perspective assembly view of the support block in which two female cartridge couplings in accordance with the present invention, are inserted;
figure 2 shows a perspective view of a Standard ISO 16028-compliant flush-face male coupling;
figure 3 shows the block in figure 1 in a longitudinal sectional view with a vertical plane passing through the axis of one of the cartridge couplings;
figure 4 shows the sectional view in figure 3, in which a flush-face male coupling is depicted with pressurized fluid;
figure 5 shows the same sectional view in figure 4, in a first coupling step of the male coupling to the female coupling;
figure 6 shows the same view in figure 5, in a successive step of inserting the male into the female cartridge;
figure 7 shows the same view in figure 5, in a successive step of inserting the male into the female cartridge, in which the outer slider of the male coupling pushes the inner slider of the cartridge;
figures 8 to 15 show successive connection steps of the male coupling with the female cartridge;
figure 16 shows a perspective view of the pusher of the female cartridge;
figures 17 to 27 show the steps of disconnecting the male coupling from the female cartridge in accordance with the present invention;

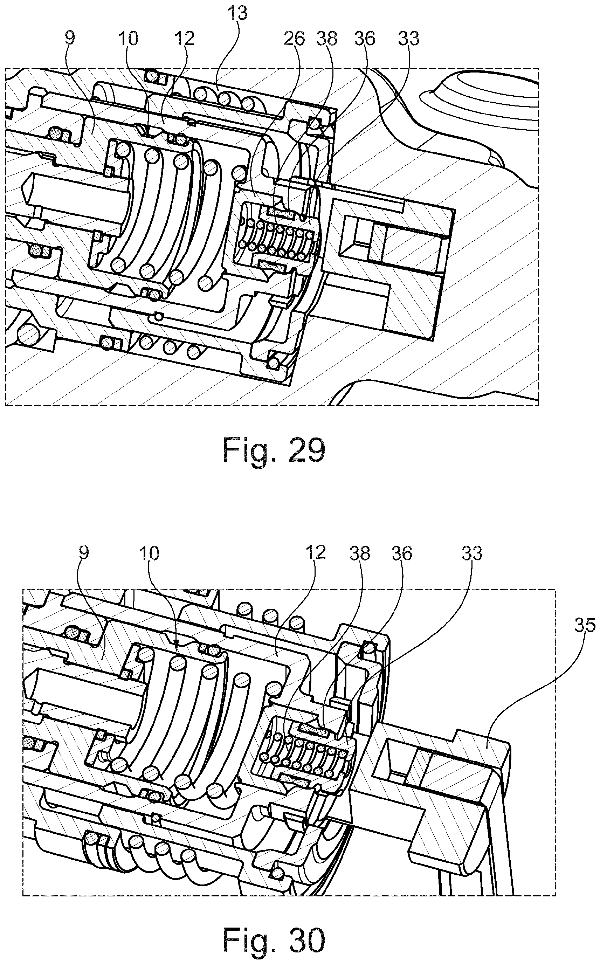

figures 28 to 30 show three-dimensional sectional views of the interface area between lever, pusher and mechanically locking slider of the cartridge in accordance with the present invention;

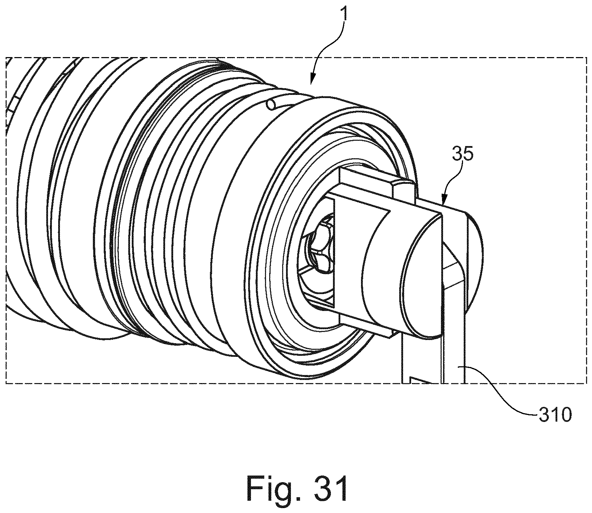

figure 31 shows a perspective non-sectional view of the interface area between lever, pusher and mechanically locking slider of the cartridge in accordance with the present invention.

### DETAILED DESCRIPTION OF THE INVENTION

The following description will disclose a preferred embodiment of the flush-face cartridge in accordance with the present invention.

Such a description is provided by way of non-limiting example, thus all variants of the described elements which may be considered equivalent are to be considered as falling within the scope of the present invention.

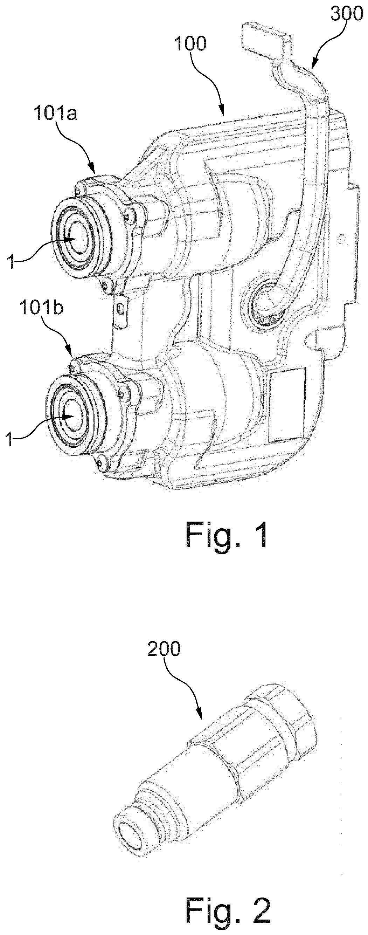

With particular reference to figure 1, a support block or manifold **100** of the type considered herein generally consists of a block made of cast iron or similar metal material, and is provided with at least one seat therein, in the embodiment two seats **101a**, **101b** configured to each house a flush-face cartridge **1** in accordance with the present invention.

Cartridge **1** in accordance with the present invention allows to obtain all the functionalities of traditional cartridges employed in the agricultural field, with the uniqueness of being couplable with Standard ISO 16028-compliant male couplings, shown for example in figure 2 and indicated with numeral **200**.

Among such functionalities, cartridge **1** in accordance with the present invention is equipped with a push-pull connection system, safety break-away disconnection system, allows coupling in the presence of residual pressure, allows coupling with pressurized male couplings if provided with pressure discharge systems, is equipped with mechanical lock of the valves in the open position.

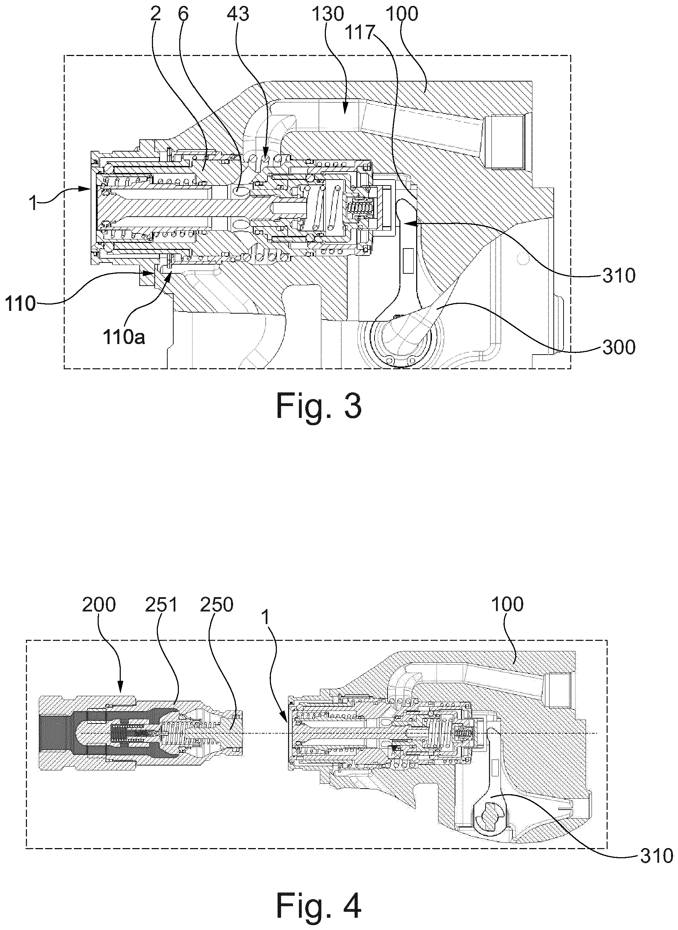

Returning to the accompanying drawings, figure 3 shows a sectional view of the support block **100** in which the female hydraulic couplings are assembled with cartridge **1** in accordance with the present invention. It is worth noting cam **310**, which is connected to the disconnecting lever **300** shown in figure 1 and the rear surface **117** of block **100**, opposite to the front surface **110** from which the cartridges **1** overlook, which is required for the interface with the hydraulic system of the manufacturing machine on which block **100** is installed.

Again with reference to figure 3 in which a sectional detail is shown of block **100** with a vertical longitudinal plane passing through the axis of a coupling with cartridge **1**, when said coupling with cartridge **1** is inserted into block **100**, the front part of the coupling faces outwardly from the front surface **110** of block **100**, while the rear part of coupling **1** is close to the cam **310** of lever **300**.

The operating fluid, in particular consisting of oil, originating from the hydraulic circuit on the machine, is directed to cartridge **1** through conduits **130**. More specifically, substantially radial holes **6** for inletting the oil are specifically provided on the ball body **2** of said female cartridge **1**.

One of the features of the female cartridge **1** in accordance with the present invention consists of the possibility of being connected both when there is no pressure and when there is residual internal pressure, and both when the male coupling is discharged and when there is residual pressure in the male coupling.

To obtain this technical result, cartridge **1** in accordance with the present invention has particular construction features.

As mentioned, the flush-face cartridge **1** comprises a substantially cylindrical shaped ball body **2**.

Advantageously, a flange **1a** may be provided as protection against dirt, the cartridge being locked in the seat of the manifold by the elastic ring **40**.

A ring nut slider **4**, it also having cylindrical symmetry, cooperates with said ball body **2**, which is arranged inwardly with respect to said ring nut slider **4**, and with a ring of locking balls **3** housed in a corresponding seat obtained on said ball body **2**.

The locking ball ring **3** is kept in the expanded position with female coupling disconnected, by an outer slider **5**, while it is radially movable during the coupling step with the male coupling **200** according to that known from the background art.

The female coupling **1** further comprises an axially movable inner slider **7** and an axial valve body **8**, a helical spring **42** arranged between said inner slider **7** and said ball body **2** being configured to counter the sliding of said inner slider **7** with respect to said ball body **2**.

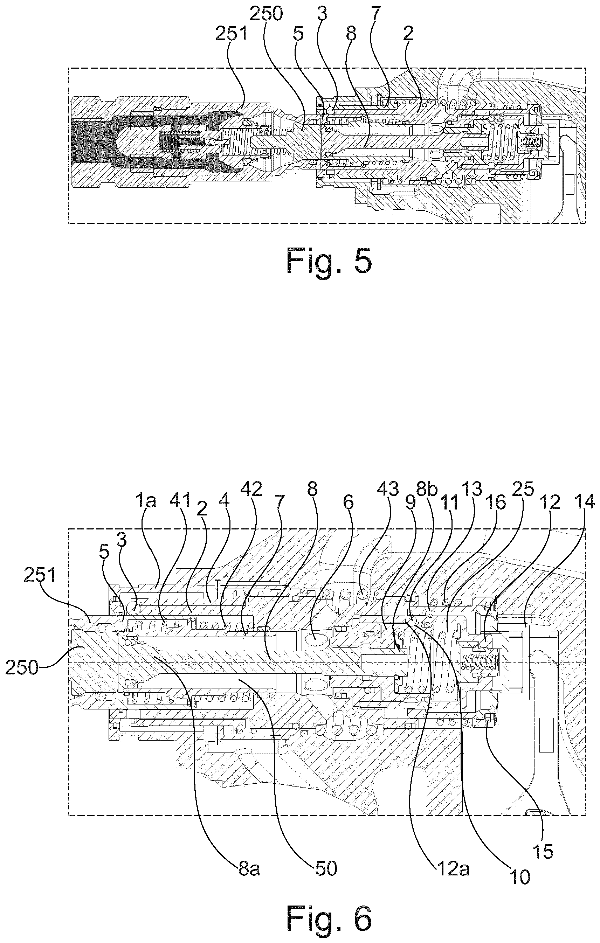

With reference for example to figure 6, the valve body **8** comprises a front end **8a** designed to come into contact with the front end of the corresponding valve body of a male coupling **200**, and a rear end **8b** to which a substantially cylindrical shaped inner body **9** is connected, preferably by screwing, and in which said rear end **8b** is at least partly inserted.

The outer surface of said inner body **9** has at least one circumferential seat **10** for housing mechanical locking balls **11** of the decompression system of cartridge **1**.

Said mechanical locking balls **11** of the decompression system are in turn inserted into a series of radial holes **12a** specifically provided on the rear body **12**, which also has a substantially cylindrical shaped end in which said inner body **9** is at least partly inserted.

Advantageously, a rear slider **13** is slidingly associated with said rear body **12** and is configured to cooperate with said mechanical locking balls **11**. The rear slider **13** is constrained to a rear abutment **14**, it also configured as a substantially cylindrical body which projects at the back from the cartridge and is connected to said rear slider **13** by means of an elastic ring **15**, and is movable between a first position in which it keeps the locking balls **11** in a circumferential seat **10** of said inner body **9**, and a second position in which it leaves said locking balls **11** free to radially expand, thus disengaging the inner body **9**.

There are formed inside said rear body **12** and said inner body **9** a decompression chamber **25** and a seat **26** for housing a decompression valve housing a decompression valve **33**, the operation of which is described below.

Such an assembly of components, that is the rear slider **13** and the rear abutment **14**, is kept in the withdrawn position, that is toward the rear part of the cartridge, by the action of the helical spring **16**, up to said rear abutment **14** coming into contact with the cam **310** of lever **300**.

Cam **310** is in turn resting at the back against the inner surface **117** of block **100**.

The rear slider **13**, the rear abutment **14** and the elastic ring **15** are therefore locked in the most withdrawn position thereof by the action of the elastic spring **16** and by the abutment against cam **310**.

The valve body **8**, the inner body **9** to which the rear end **8b** of said valve body is connected, and the rear body **12** are in turn locked in the most advanced position thereof, due to the mechanical locking balls **11** of the decompression system of cartridge **1**.

Such a system is called "mechanical lock" because, as shown for example in figure 6, when a male coupling **200** is pushed toward the female coupling, there is a step in which the valve body **250** of the male coupling **200** tends to push the valve body **8** of the female cartridge **1** into the withdrawn position.

The assembly of components comprising the valve body **8**, the inner body **9**, the rear body **12** which supports said seat **26** of said decompression valve **33**, rear slider **13**, with the related mechanical locking balls **11** of the decompression system, remains locked in the advanced position with respect to the ball body, thus opening the valve of the male coupling.

The operation of cartridge **1** will now be illustrated using various hypotheses so as to clarify the components and functionality of the integrated flush-face cartridge in accordance with the present invention.

With particular reference to figure 5, when male coupling **200** and flush-face female cartridge **1** come into contact, the valve body **250** of the male coupling **200** comes into contact with the valve body **8** of the female cartridge **1** at the front, and the outer body **251** of the male coupling simultaneously comes into contact with the outer slider **5** at the front.

With reference to figure 6, proceeding in the step of coupling the male coupling **200** to the female cartridge 1, there is a step in which the valve body **250** of the male coupling pushes the valve body **8** of the female cartridge into the withdrawn position.

As already described above, the clearances of the mechanical locking system are eliminated in this step, that is the mechanical locking balls **11** housed in the circumferential seat **10** conveniently provided in said inner body **9** are inserted into said radial holes **12a** specifically provided on the rear body **12**, and are kept in interference with said radial holes **12a** by said rear slider **13**.

The mechanical locking circumstance is the one described above with reference to figure 6.

Continuing in the connection step, the main body **251** of the male coupling pushes the outer slider **5** at the back until the outer slider **5**, opposing the action of a helical spring **41** provided between said outer slider **5** and said inner slider **7**, comes into contact with the inner slider **7**, thus inducing the withdrawal which counters the action of spring 42, which acts between said inner slider **7** and said ball body **2**.

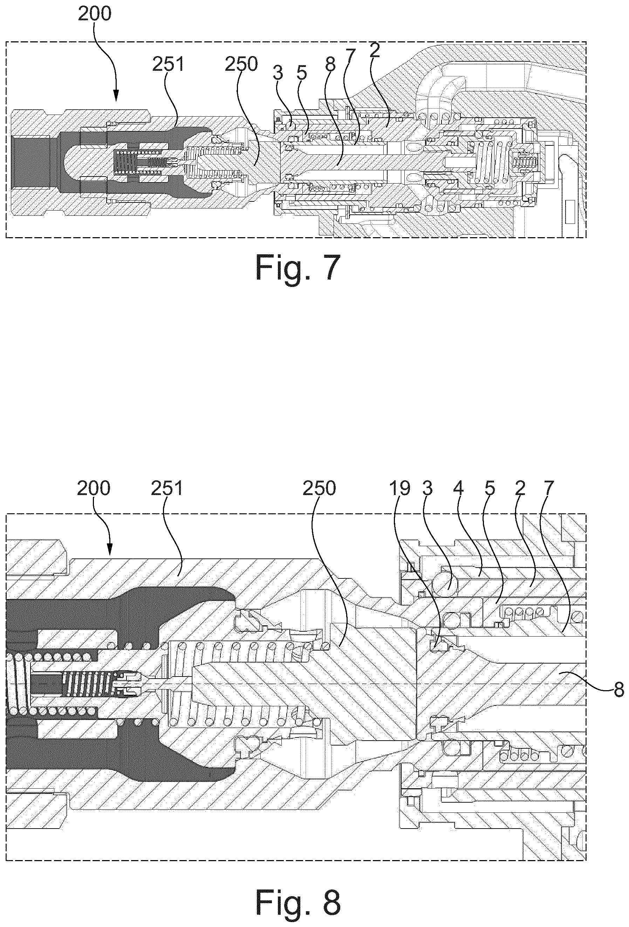

With reference to figure 8, continuing with the connection step, the inner slider **7** is caused to withdraw up to revealing gasket **19** at the front of the valve body **8** of cartridge **1**.

Therefore, the valve body **8** of cartridge **1** has not withdrawn in this step, while the main body **251** of the male coupling advances toward the cartridge. This results in a related movement of the valve body **250** of the male coupling, which comes into contact with the micro decompression valve **252** provided on the male coupling **200**, by opening it.

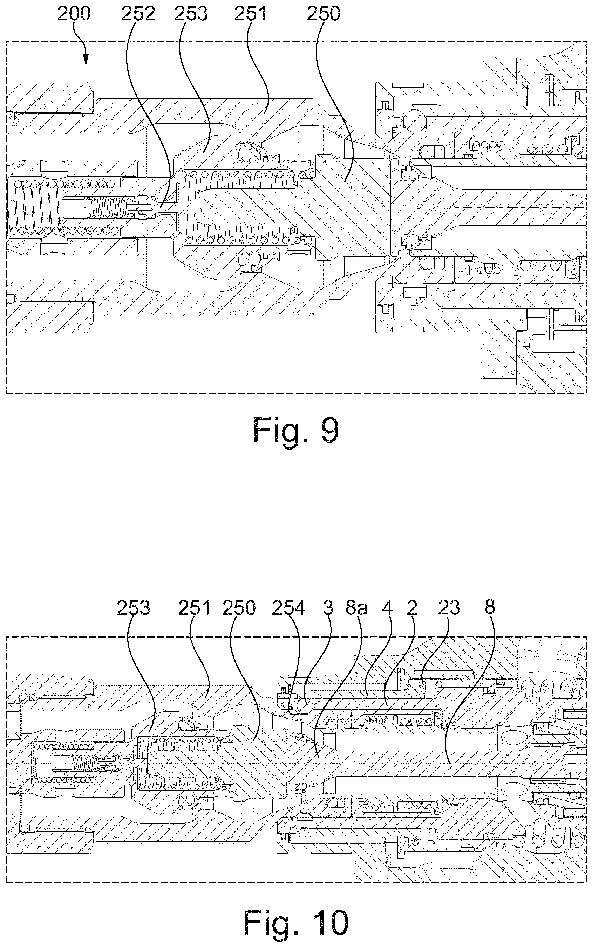

With reference to figure 9, proceeding in the connection step of the male coupling **200** to the female cartridge **1**, the valve body **250** of the male coupling pushes the valve body **252** of the female cartridge into the withdrawn position, thus discharging the residual pressure in the rear chamber of the male coupling. In this step, the valve body **250** of the male coupling comes into contact with an inner valve **253** of the male coupling.

With reference to figure 10, in the last connection step, the main body **251** of the male coupling **200** is further inserted into the female cartridge **1**, thus pushing the outer slider **5** and the inner slider **7** into the withdrawn position.

The valve body **250** of the male coupling simultaneously pushes the inner valve **253** of the male coupling **200** into the withdrawn position, thus opening the passageway of the oil flow in the male coupling.

In this step, the locking balls **3** housed in a corresponding seat obtained on said ball body **2** are inserted into a circumferential locking groove **254** obtained on the outer surface by the main body **251** of the male coupling **200**, thus locking the male coupling **200** in the female cartridge **1**. The helical spring **23** pushes the ring nut slider **4**, which keeps the locking balls **3** engaged in the circumferential locking groove **254**.

The connection steps described hereto do not vary even when considering the connection of a male coupling **200** in which there is no pressurized fluid. With cartridge **1** in accordance with the present invention, it is also possible to connect a male coupling with no residual pressure discharge system, that is without the micro decompression valve **252** and the inner valve **253** of the male coupling, on the condition that the male coupling is thus discharged.

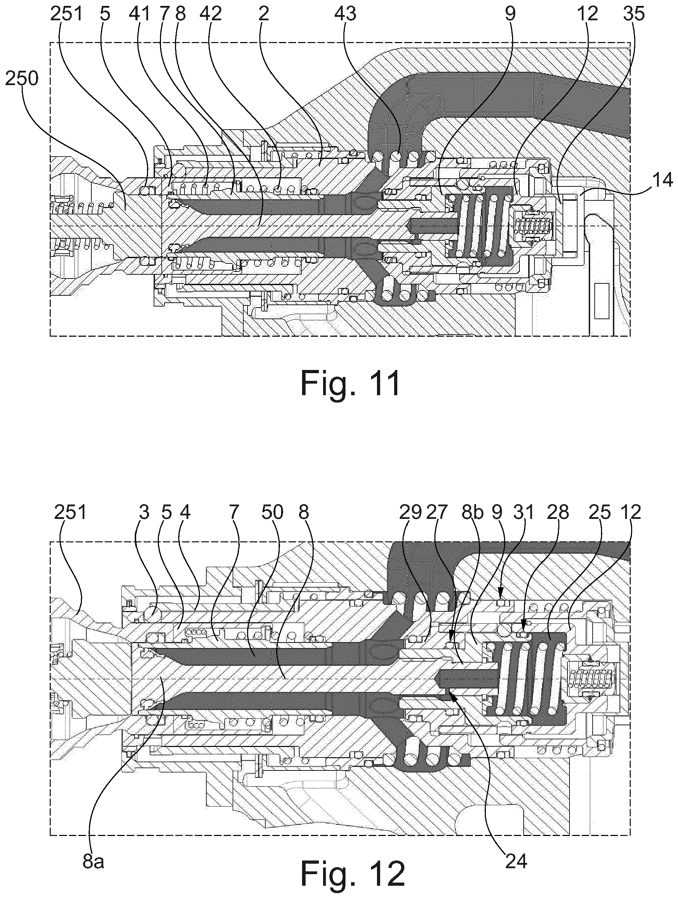

The connection step where there is pressurized fluid in the female cartridge will now instead be analyzed. Reference is made to figure 11, where the condition is seen in which the front faces of the male **250** and female **8** valve bodies are already in contact.

The valve body **250** of the male coupling comes into contact with the valve body **8** of the female cartridge **1** and the main body **251** of the male coupling simultaneously comes into contact with the outer slider **5** of cartridge **1**.

With reference to figure 12, in a first connection step, the main body **251** of the male coupling pushes the outer slider **5** into contact with the inner slider **7**.

Due to the presence of a calibrated radial discharge hole **24** on the rear end **8b** of the valve body **8** of cartridge **1**, the pressurized fluid involving the cartridge also fills the decompression chamber **25** formed, as mentioned, between the components: valve body **8**, inner body **9**, rear body **12** and seat **26** of the decompression valve **33**.

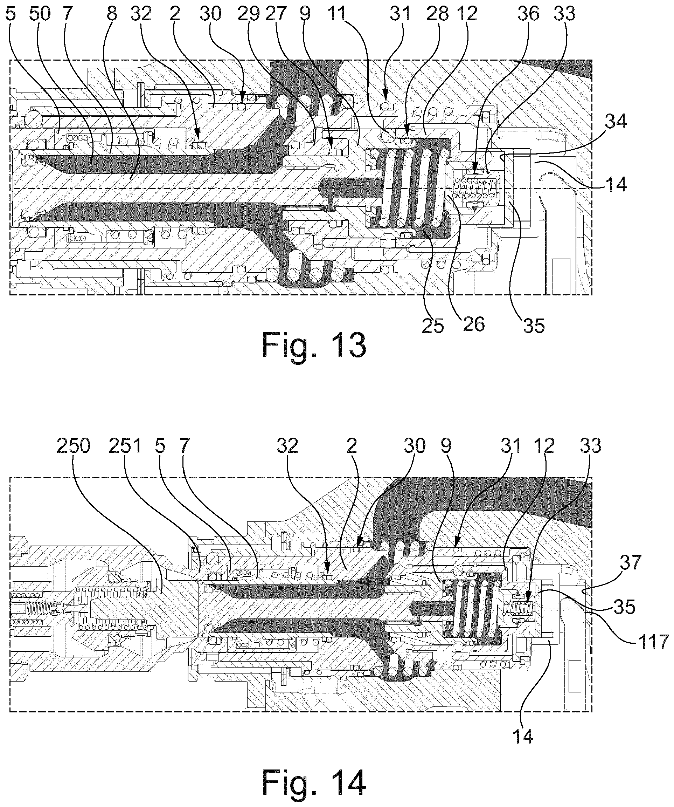

With reference to figure 13, the ball body **2** is hydraulically balanced under this condition, because the pressure of the fluid acts on the first sealing gasket **30** and on the second sealing gasket **31** of said ball body **2**, which are specifically provided on the outer surface of said ball body **2**, which operate on identical diameters.

Thus, the ball body 2 remains stopped in the initial position thereof, also in the presence of pressure in the cartridge. Moreover, the pressure of the fluid in the main chamber **50** acts on the first sealing gasket **27** of said inner body **9** interposed between said inner body **9** and a spacer **29**, which is interposed between said inner body **9** and said ball body **2**, while the pressure in the decompression chamber **25** acts on the second sealing gasket **28** of said inner body **9** interposed between said inner body **9** and said rear body **12**.

The two gaskets are arranged at different diameters, more specifically the inner body **9** having a front portion with smaller outer diameter and a rear portion with larger outer diameter, as clearly shown in figure **13**.

Thus, the first **27** and second **28** gaskets of said inner body **9** act on different diameters, which creates a hydraulic unbalance which keeps the assembly of components comprising the valve body **8** and the inner body **9** pushed forward against spacer **29**, which in turn is locked between the ball body **2** and the rear body **12**.

With reference to figure **14**, the successive connection step is now described.

The movement of the ball body **2** is made possible because the first **30** and the second **31** sealing gaskets of the ball body **2** act on the same diameter, as mentioned, thus eliminating the push due to the pressure.

The inner slider **7** is kept pushed forward against the valve body **8** by the pressure which acts on the first gasket of the ball body **32** and on the second gasket of the ball body **19**, which are hydraulically unbalanced.

The valve body **8** and the inner body **9** are also pushed at the front to come into contact on spacer **29**, which in turn is locked between said ball body 2 and said rear body **12**.

Thus, as long as there is pressurized fluid in the cartridge, the inner body **9**, the rear body **12**, spacer **29**, the valve body **8**, the seat of the decompression valve **26** and the inner slider **7** are locked with respect to the ball body **2**.

The main body **251** of the male coupling **200** pushes the outer slider **5** of cartridge **1**, which in turn pushes the aforesaid assembly of components into the withdrawn position up to bringing the decompression valve **33** into contact against the inner abutment surface **34** of pusher 3**5**.

As will be better described below, pusher **35** is a substantially cylindrical member in which said rear body 1**2** is inserted, and which projects toward the rear area of the cartridge, interposing between said decompression valve **33** and said cam **310** of said lever **300**.

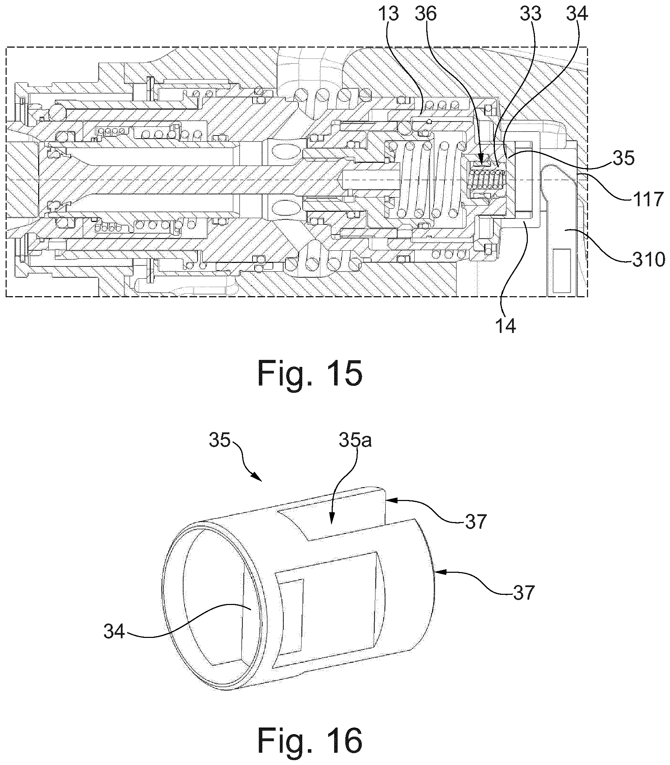

With reference to figure 15, continuing in the connection travel of the male coupling into the female cartridge **1**, it is worth noting how the decompression valve **33** opens the passageway of the oil between the interior of the cartridge and a rear area of the cartridge itself, thereby discharging the pressure. Indeed, it is worth noting that the decompression valve **33** is kept in position by the inner abutment surface **34** of pusher **35**, while the rear body **12** continues to be pushed forward with the seat of the decompression valve **26**, until gasket **36** of the decompression valve **33** is no longer at the inner surface of seat **26** and therefore it no longer exerts the fluid seal, thus allowing the discharge of the pressurized oil.

Gasket **36** of the decompression valve **33** operates on two identical diameters, which makes possible the operation of opening the pressure discharge valve with the least effort possible. Moreover, pusher **35** has an inner surface **37**, which rests on the inner abutment surface **117** of block **100**.

Figure 16 shows a perspective view of pusher **35** alone, in which it is worth noting the abutment surface **34** for the decompression valve **33** and the rear outer surface **37**, which is in contact with the abutment surface **117** of block **100**. In order to allow cam **310** to actuate the rear body **12**, pusher **35** is conveniently shaped so as to have a longitudinal groove **35a** of sufficient dimensions to allow the insertion of cam **310** into said groove.

Once the pressure inside the female cartridge 1 is eliminated, the connection continues as described above in the event of connection with no pressure.

At the end of the connection, the decompression valve **33** closes the passageway of the fluid toward the rear area again due to the push of the return spring **38** of the decompression valve **33**, which acts between said seat of the decompression valve **26** and the inner surface of said valve.

The mechanical locking system is not disengaged during the connection procedure described above.

Now the disconnection step will be analyzed to understand the operation of the lever decompression system of the cartridge.

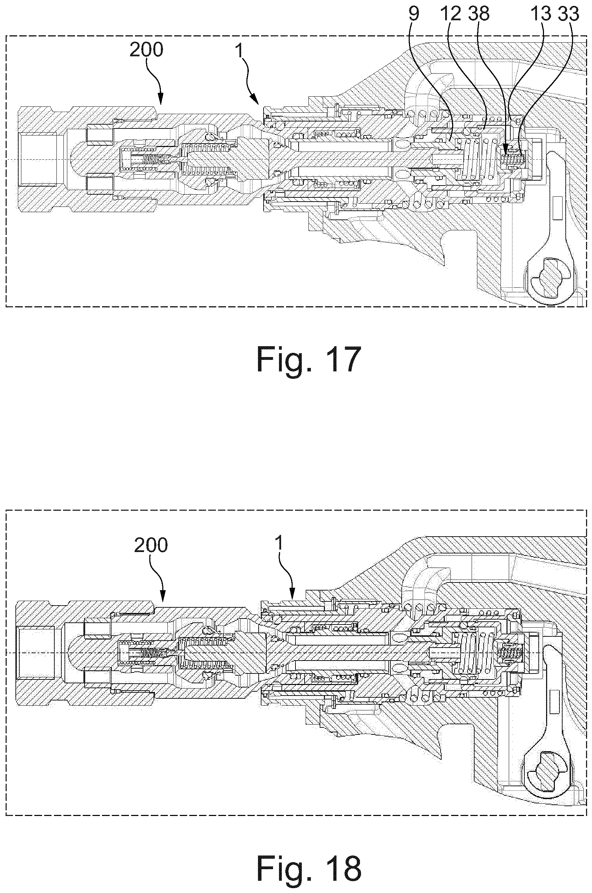

Reference is made to figure 17, which shows a condition of connection made: the male coupling is inserted in the female cartridge and the coupling and cartridge valves are open.

Due to the configuration of cartridge **1** in accordance with the present invention, it is provided with pull function, thus if there is no pressurized fluid in the circuit, and therefore in the couplings, it is sufficient to pull the male coupling to obtain the disconnection.

The case is instead different in which there is pressurized fluid in the circuit. In such a case, there is a need to act in advance on lever **300** to discharge the pressure in order to succeed in disconnecting the male coupling from the female cartridge.

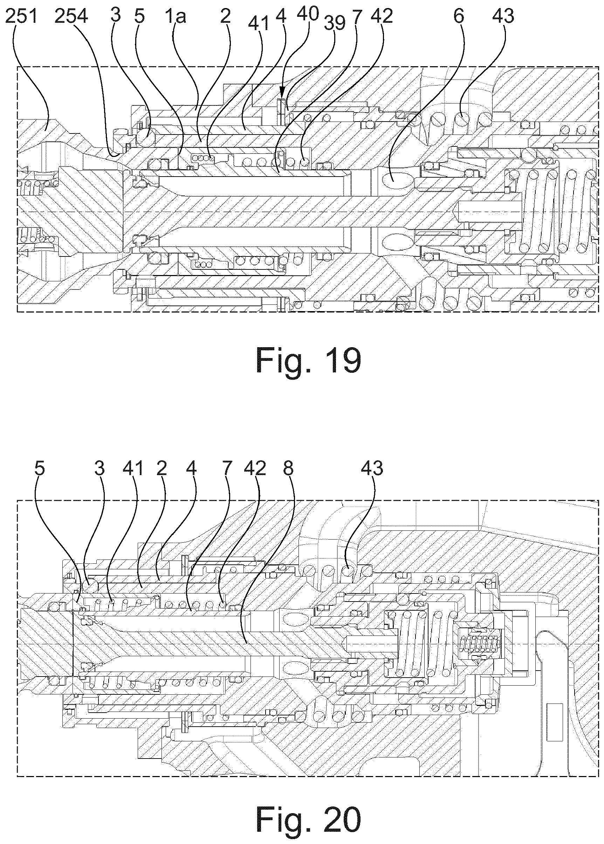

Figure 18 depicts cartridge **1** in accordance with the present invention, connected to the male coupling in the absence of pressure. Figure 19 shows a first disconnection step which occurs simply by pulling the male coupling away from the cartridge. The main body **251** of the male coupling **200** is pulled outwardly, the locking balls **3** initially locked between the circumferential locking groove **254** obtained on the outer surface by the main body **251** of the male coupling **200** transmit the translation motion of the male coupling **200** also to the ball body **2** of the female cartridge **1**. The ball body **2** is therefore in an advanced position with respect to the normal resting position, as shown in figure 19. The ring nut slider **4** remains stopped, resting on the outer body **39** of the cartridge, which is in turn locked in block **100** by the elastic ring **40**.

The locking balls **3** are now disengaged because the ring nut slider **4** no longer prevents the radial expansion thereof, and they may therefore come out of the circumferential seat **254**.

The circumstance shown in figure 20 shows the male coupling already disconnected from the female cartridge. The helical springs reposition the components of the cartridge, in particular: a first spring **41** acting between said outer slider **5** and said inner slider **7**, repositions the outer slider **8**; a second spring **42** acting between said inner slider **7** and said ball body **2**, repositions the inner slider **7**; and a third spring **43** acting between said ball body **2** and said block **100**, repositions the ball body **2**.

At this point, the ball body **2**, inner slider **7** and outer slider 8 components are in the initial position thereof of disconnected cartridge.

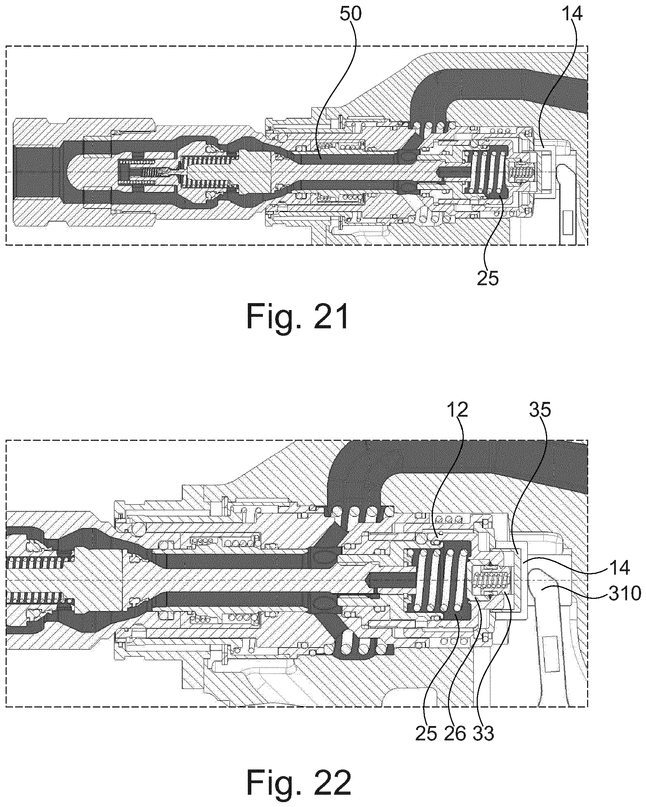

With reference to figure 21, the disconnection step is now described when there is pressurized fluid in the circuit.

Under the normal operating condition, there is also pressurized fluid in the decompression chamber **25**. The operator acts on lever **300** thus obtaining the rotation of cam **310**, which pushes the rear abutment **14** into the advanced position up to the inner surface **14a** of the rear abutment **14** facing toward the front part of the cartridge coming into contact with the outer surface **35a** of pusher **35** facing toward the rear part of the cartridge.

The rear slider **13** is simultaneously also pushed into the advanced position, because as mentioned, the rear abutment **14** is constrained to the rear slider **13** by means of the elastic ring **15**.

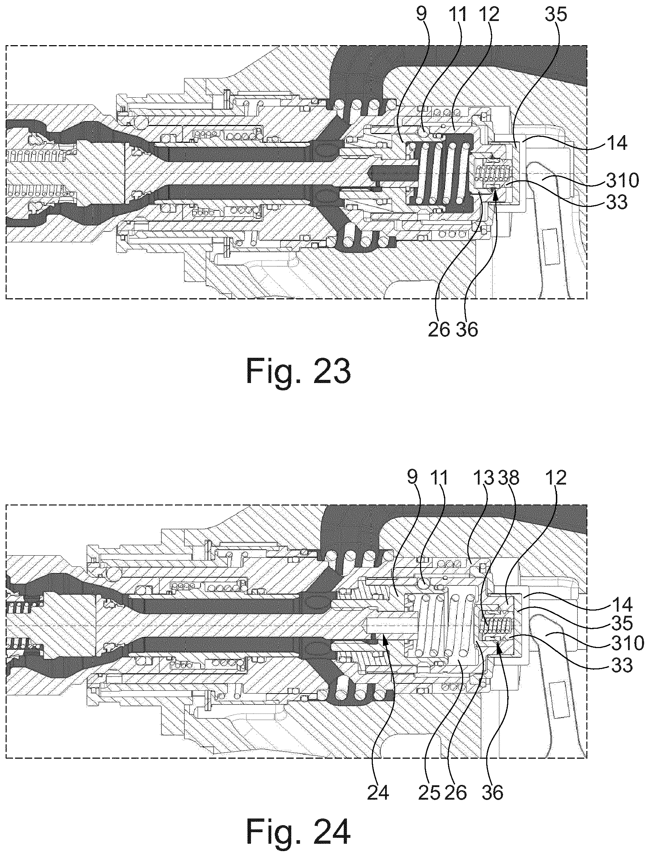

Figure 23 shows a successive step of the actuation of the depressurization device: by continuing to actuate lever **300**, cam **310** continues to push the rear abutment **14** and pusher **35** forward, that is toward the front part of the coupling, thus coming into contact with the decompression valve **33**. The decompression valve **33** is compressed, thus discharging the pressure of the fluid in the decompression chamber **25**, as shown in figure 24.

In this step, the pressure in the main conduit also remains for a short instant due to the calibrated radial discharge hole **24** on the rear end **8b** of the valve body **8**.

In this step, pusher **35** comes into contact with the rear body **12.**

The mechanical locking balls **11** of the decompression system of cartridge **1** are no longer kept in the locking position thereof by the rear slider **13**, and thus may come out of the circumferential seat **10** provided on the inner body **9**, thus disengaging the inner body **9** itself from the rear body **12**.

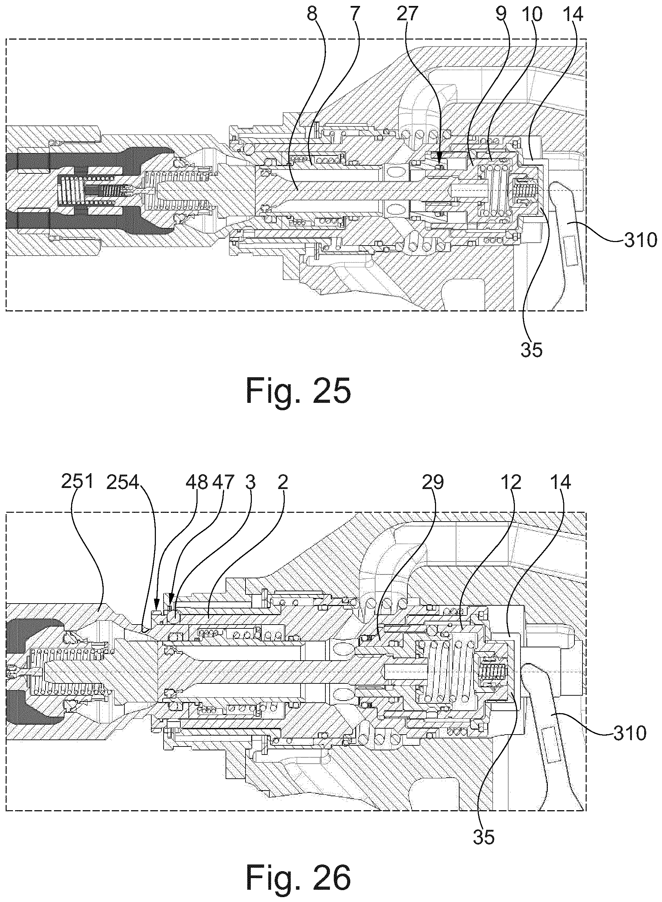

With particular reference to figure 25, it is worth noting how by acting on the first sealing gasket **27** of said inner body **9**, the pressure in the main channel of the cartridge pushes the inner body **9** and valve body **8** components into the withdrawn position up to resting the valve body **8** against the inner slider **7**.

Thereby, the inner valves of the male coupling close, trapping the pressurized fluid in the male coupling itself.

By continuing to actuate the lever, the rear abutment **14**, pusher **35**, the rear body **12**, spacer **29**, the ball body **2** move outwardly up to disengaging the locking balls **3** from the circumferential seat **254** of the main body **251** of the male coupling. The circumstance is depicted in figure 26.

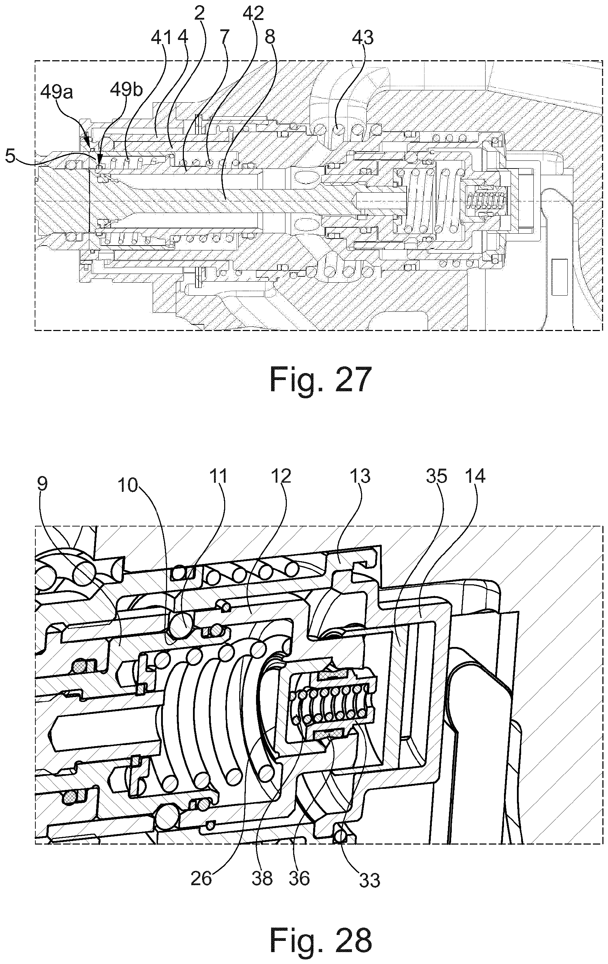

Figure 28 shows the male coupling and the female cartridge **1** in disconnected step.

Similarly to what occurs in the event of disconnection in the absence of pressure, the first **41**, the second **42** and the third **43** helical springs reposition the ball body **2**, outer slider **5** the inner slider **7** components in the initial position.

Advantageously, a securing flange **1a** containing a front gasket **47** is connected to the front abutment **48** assembled on the ball body **2**, with function of dirt guard and of securing to the support block **100**.

Moreover, a first gasket **49a** of the outer slider **5** operates between said outer slider **5** and said ball body **2**, and a second gasket **49b** of the inner slider **7** operates between said ball body **2** and said inner slider **7**.

Drawings 28 to 31 show three-dimensional views of the detail of the decompression system of cartridge **1** in accordance with the present invention, as already described above.

It has thus been shown how the integrated flush-face female cartridge **1** in accordance with the present invention allows the task and objects to be resolved by the invention.

In particular, the integrated flush-face female cartridge 1 in accordance with the present invention can be coupled with any type of Standard ISO 16028-compliant flush-face male coupling.

Moreover, the cartridge in accordance with the present invention is provided with a system for discharging the pressure which allows connection and disconnection, also with residual pressure.

The cartridge in accordance with the present invention is also provided with a mechanical lock for locking the decompression system in the coupling step, with the possibility of release by actuating the pressure discharge lever.

Again, the mechanical lock system with which the integrated flush-face female cartridge in accordance with the present invention is provided, allows the male coupling to be disconnected also in the presence of pressurized fluid in the circuit.

## Claims

1. A female cartridge (1) which is insertable into a support block (100), comprising an outer ring nut slider (4) and a ball body (2) provided with a plurality of radial holes (6) for inletting the fluid into the cartridge, said outer ring nut slider (4) being axially movable with respect to said ball body (2), which in turn comprises a circumferential housing seat for a locking ball ring (3), said cartridge (1) further comprising an outer slider (5), an axial valve body (8), and an inner slider (7) interposed between said valve body (8) and said outer slider (5), said outer slider (5) being axially movable relative to said inner slider (7), which in turn is axially movable with respect to said ball body (2), said outer slider (5) being configured so as to keep said locking balls (3) within said circumferential housing seat of said ball body (2) when the cartridge is uncoupled, said axial valve body (8), said outer slider (5) and the front end (8a) of said valve body (8) being aligned along the front surface of the female cartridge (1) so that said female cartridge coupling (1) is capable of being coupled to a flush-face male coupling (200), **characterized in that** said valve body (8) comprises a rear end (8b) to which an inner body (9) is connected, which is at least partly inserted into a rear body (12), said inner body (9) having at least one circumferential seat (10) adapted to house a plurality of mechanical locking balls (11) of the system of said cartridge (1) and said rear body (12) comprising a plurality of radial holes (12a) for inserting said mechanical locking balls (11).

2. A female cartridge (1) according to claim 1, **characterized in that** it further comprises a rear slider (13) slidingly associated externally with said rear body (12) and configured to cooperate with said mechanical locking balls (11), said rear slider (13) being movable between a first position in which it keeps said locking balls (11) inside said circumferential seat (10) of said inner body (9), and a second position in which it leaves said locking balls (11) free to radially expand, thus disengaging the inner body (9).

3. A female cartridge (1) according to one of claims 1 and 2, **characterized in that** it further comprises a decompression chamber (25) and a decompression valve (33) defined inside said rear body (12) and said inner body (9), said decompression valve being housed in a housing seat (26) defined inside said decompression chamber (25).

4. A female cartridge (1) according to one of claims 2 and 3, **characterized in that** said rear slider (13) is associated with a rear abutment (14) which projects at the back from the cartridge thus abutting, with cartridge inserted, against a cam (310) of a disconnecting lever (300) which can be operated by the user, said rear abutment (14) being kept in the withdrawn position by the action of a helical spring (16) acting between said rear slider (13) and said ball body (2) up to the contact of said rear abutment (14) with said cam (310).

5. A female cartridge (1) according to one of claims 1 to 4, **characterized in that** it further comprises a spacer (29) interposed between said inner body (9) and said ball body (2) and **in that** it comprises a first sealing gasket (27) of said inner body (9) interposed between said inner body (9) and said spacer (29), and a second sealing gasket (28) of said inner body (9) interposed between said inner body (9) and said rear body (12), said inner body having a front portion with smaller outer diameter and a rear portion with larger outer diameter, so that said first sealing gasket (27) and second sealing gasket (28) of said inner body (9) therefore act on different diameters, thus creating a hydraulic unbalance.

6. A female cartridge (1) according to one of claims 1 to 5, **characterized in that** it further comprises a pusher (35) which is substantially cylindrical in shape, within which at least one portion of said rear body (12) is slidingly inserted and which comprises a rear outer surface (37) which comes into contact with the inner abutment surface (117) of said support block (100).

7. A female cartridge (1) according to claim 6, **characterized in that** said pusher (35) comprises a longitudinal groove (35a) adapted to allow the insertion of said cam (310) into said groove.

8. A female cartridge (1) according to one of claims 1 to 7, **characterized in that** it further comprises a flange (1a) connected to said ball body (2) with function of dirt guard.

9. A system comprising a support block (100), wherein at least one female cartridge (1) according to any one of claims 1 to 8 is inserted, said female cartridge being connectable to a Standard ISO 16028-compliant flush-face male coupling (200).

## Patentansprüche

1. Buchsenkartusche (1), die in einen Trägerblock (100) einsetzbar ist, der ein äußeres Ringnutgleitstück (4) und einen Kugelkörper (2) umfasst, der mit einer Mehrzahl radialer Löcher (6) zum Einlass des Fluides in die Kartusche versehen ist, wobei das Außenringnutgleitstück (4) axial in Bezug auf den Kugelkörper (2) bewegbar ist, der seinerseits einen Umfangsgehäusesitz für einen Verriegelungskugelring (3) umfasst, wobei die Kartusche (1) ferner ein Außengleitstück (5), einen axialen Ventilkörper (8) sowie ein Innengleitstück (7) umfasst, das zwischen dem Ventilkörper (8) und dem Außengleitstück (5) angeordnet ist, wobei das Außengleitstück (5) axial in Bezug auf das Innengleitstück (7) bewegbar ist, das seinerseits axial in Bezug auf den Kugelkörper (2) bewegbar ist, wobei das Außengleitstück (5) derart konfiguriert ist, die Verriegelungskugeln (3) in dem Umfangsgehäusesitz des Kugelkörpers (2) zu halten, wenn die Kartusche entkoppelt ist, wobei der axiale Ventilkörper (8), das Außengleitstück (5) und das vordere Ende (8a) des Ventilkörpers (8) entlang der Vorderfläche der Buchsenkartusche (1) so ausgerichtet sind, dass die Buchsenkartuschenkopplung (1) zur Kopplung mit einer flachabdichtenden Steckkopplung (200) koppelbar ist,
**dadurch gekennzeichnet, dass**
der Ventilkörper (8) ein rückwärtiges Ende (8b) umfasst, mit dem ein Innenkörper (9) verbunden ist, der zumindest teilweise in einem rückwärtigen Körper (12) eingesetzt ist, wobei der Innenkörper (9) zumindest einen Umfangssitz (10) aufweist, der derart angepasst ist, eine Mehrzahl mechanischer Verriegelungskugeln (11) des Systems der Kartusche (1) aufzunehmen, und der rückwärtige Körper (12) eine Mehrzahl radialer Löcher (12a) zum Einsetzen der mechanischen Verriegelungskugeln (11) umfasst.

2. Buchsenkartusche (1) nach Anspruch 1,
**dadurch gekennzeichnet, dass**
sie ferner ein rückwärtiges Gleitstück (13) umfasst, das außerhalb des rückwärtigen Körpers (12) diesem gleitend zugeordnet und derart konfiguriert ist, mit dem mechanischen Verriegelungskugeln (11) zusammenzuwirken, wobei das rückwärtige Gleitstück (13) zwischen einer ersten Position, in der es die Verriegelungskugeln (11) in dem Umfangssitz (10) des Innenkörpers (9) hält, und in einer zweiten Position bewegbar ist, in der es die Verriegelungskugeln (11) zur radialen Ausdehnung frei lässt, wodurch der eine Körper (9) außer Eingriff gebracht wird.

3. Buchsenkartusche (1) nach einem der Ansprüche 1 oder 2,
**dadurch gekennzeichnet, dass**
sie ferner eine Dekompressionskammer (25) und ein Dekompressionsventil (33) umfasst, das innerhalb des rückwärtigen Körpers (12) und des inneren Körpers (9) definiert ist, wobei das Dekompressionsventil in einem Gehäusesitz (26) untergebracht ist, der in der Dekompressionskammer (25) definiert ist.

4. Buchsenkartusche (1) nach einem der Ansprüche 2 oder 3,
**dadurch gekennzeichnet, dass**
das rückwärtige Gleitstück (13) einem rückwärtigen Anschlag (14) zugeordnet ist, der an dem Rücken von der Kartusche vorragt, wodurch er, wenn die Kartusche eingesetzt ist, gegen einen Nocken (310) eines Trennhebels (300) anliegt, der von dem Bediener betätigt werden kann, wobei der rückwärtige Anschlag (14) in der zurückgezogenen Position durch die Wirkung einer Schraubenfeder (16), die zwischen dem rückwärtigen Gleitstück (13) und dem Kugelkörper (2) wirkt, bis zu dem Kontakt des rückwärtigen Anschlags (14) mit dem Nocken (310) gehalten wird.

5. Buchsenkartusche (1) nach einem der Ansprüche 1 bis 4,
**dadurch gekennzeichnet, dass**
sie ferner einen Abstandhalter (29) umfasst, der zwischen dem Innenkörper (9) und dem Kugelkörper (2) angeordnet ist, und dass sie eine erste Dichtung (27) des Innenkörpers (9), die zwischen dem Innenkörper (9) und dem Abstandhalter (29) angeordnet ist, und eine zweite Dichtung (28) des Innenkörpers (9) aufweist, die zwischen dem Innenkörper (9) und dem rückwärtigen Körper (12) angeordnet ist, wobei der Innenkörper einen vorderen Abschnitt mit kleinerem Außendurchmesser und einen rückwärtigen Abschnitt mit größerem Außendurchmesser aufweist, so dass die erste Dichtung (27) und die zweite Dichtung (28) des Innenkörpers (9) dafür an verschiedenen Durchmessern wirken, wodurch ein hydraulisches Ungleichgewicht erzeugt wird.

6. Buchsenkartusche (1) nach einem der Ansprüche 1 bis 5,
**dadurch gekennzeichnet, dass**
sie ferner eine Schubeinrichtung (35) umfasst, die im Wesentlichen zylindrisch geformt ist und in der zumindest ein Abschnitt des rückwärtigen Körpers (12) verschiebbar eingesetzt ist, und die eine rückwärtige Außenfläche (37) umfasst, die in Kontakt mit der inneren Anlagefläche (117) des Trägerblocks (100) kommt.

7. Buchsenkartusche (1) nach Anspruch 6,
**dadurch gekennzeichnet, dass**
die Schubeinrichtung (35) eine Längsnut (35a) umfasst, die derart angepasst ist, das Einsetzen des Nockens (310) in die Nut zu ermöglichen.

8. Buchsenkartusche (1) nach einem der Ansprüche 1 bis 7,
**dadurch gekennzeichnet, dass**
sie ferner einen Flansch (1a) umfasst, der mit dem Kugelkörper (2) mit der Funktion einer Schmutzabschirmung verbunden ist.

9. System mit einem Trägerblock (100), wobei zumindest eine Buchsenkartusche (1) nach einem der Ansprüche 1 bis 8 eingesetzt ist, wobei die Buchsenkartusche mit einer flachabdichtenden Steckkopplung (200) gemäß Standard ISO 16028 verbindbar ist.

## Revendications

1. Cartouche femelle (1) qui est insérable dans un bloc de support (100), comprenant un coulisseau d'écrou à oeillet externe (4) et un corps de bille (2) pourvu d'une pluralité de trous radiaux (6) pour laisser entrer le fluide dans la cartouche, ledit coulisseau d'écrou à oeillet externe (4) étant mobile axialement par rapport audit corps de bille (2), qui à son tour comprend un siège de logement circonférentiel pour une bague à bille de verrouillage (3), ladite cartouche (1) comprenant en outre un coulisseau externe (5), un corps de vanne axial (8), et un coulisseau interne (7) interposé entre ledit corps de vanne (8) et ledit coulisseau externe (5), ledit coulisseau externe (5) étant mobile axialement par rapport audit coulisseau interne (7), qui à son tour est mobile axialement par rapport audit corps de bille (2), ledit coulisseau externe (5) étant configuré de façon à conserver lesdites billes de verrouillage (3) au sein dudit siège de logement circonférentiel dudit corps de bille (2) lorsque la cartouche est détachée, ledit corps de vanne axial (8), ledit coulisseau externe (5) et l'extrémité avant (8a) dudit corps de vanne (8) étant alignés le long de la surface avant de la cartouche femelle (1) de sorte que ledit raccord de cartouche femelle (1) soit capable d'être raccordé à un raccord mâle à face plate (200), **caractérisée en ce que** ledit corps de vanne (8) comprend une extrémité arrière (8b) à laquelle est accouplé un corps interne (9), qui est inséré au moins en partie dans un corps arrière (12), ledit corps interne (9) ayant au moins un siège circonférentiel (10) adapté pour loger une pluralité de billes de verrouillage mécanique (11) du système de ladite cartouche (1) et ledit corps arrière (12) comprenant une pluralité de trous radiaux (12a) pour insérer lesdites billes de verrouillage mécanique (11).

2. Cartouche femelle (1) selon la revendication 1, **caractérisée en ce qu'**elle comprend en outre un coulisseau arrière (13) associé de façon coulissante extérieurement audit corps arrière (12) et configuré pour coopérer avec lesdites billes de verrouillage mécaniques (11), ledit coulisseau arrière (13) étant mobile entre une première position dans laquelle il conserve lesdites billes de verrouillage (11) à l'intérieur dudit siège circonférentiel (10) dudit corps interne (9), et une seconde position dans laquelle il laisse lesdites billes de verrouillage (11) libres d'opérer une expansion radiale, se dégageant ainsi du corps interne (9).

3. Cartouche femelle (1) selon l'une des revendications 1 et 2, **caractérisée en ce qu'**elle comprend en outre une chambre de décompression (25) et une vanne de décompression (33) définies à l'intérieur dudit corps arrière (12) et dudit corps interne (9), ladite vanne de décompression étant logée dans un siège de logement (26) défini à l'intérieur de ladite chambre de décompression (25).

4. Cartouche femelle (1) selon l'une des revendications 2 et 3, **caractérisée en ce que** ledit coulisseau arrière (13) est associé à une butée arrière (14) qui dépasse au dos de la cartouche butant ainsi, avec la cartouche insérée, contre une came (310) d'un levier de désaccouplement (300) qui peut être actionné par l'utilisateur, ladite butée arrière (14) étant conservée dans la position retirée par l'action d'un ressort hélicoïdal (16) agissant entre ledit coulisseau arrière (13) et ledit corps de bille (2) jusqu'au contact de ladite butée arrière (14) avec ladite came (310).

5. Cartouche femelle (1) selon l'une des revendications 1 à 4, **caractérisée en ce qu'**elle comprend en outre une entretoise (29) interposée entre ledit corps interne (9) et ledit corps de bille (2) et **en ce qu'**elle comprend un premier joint d'étanchéité (27) dudit corps interne (9) interposé entre ledit corps interne (9) et ladite entretoise (29), et un second joint d'étanchéité (28) dudit corps interne (9) interposé entre ledit corps interne (9) et ledit corps arrière (12), ledit corps interne ayant une portion avant avec un diamètre externe plus petit et une portion arrière avec un diamètre externe plus grand, de sorte que lesdits premier joint d'étanchéité (27) et second joint d'étanchéité (28) dudit corps interne (9) agissent par conséquent sur des diamètres différents, créant ainsi un déséquilibre hydraulique.

6. Cartouche femelle (1) selon l'une des revendications 1 à 5, **caractérisée en ce qu'**elle comprend en outre un poussoir (35) qui est de forme sensiblement cylindrique, au sein duquel au moins une portion dudit corps arrière (12) est insérée de façon coulissante et qui comprend une surface externe arrière (37) qui vient en contact avec la surface de butée interne (117) dudit bloc de support (100).

7. Cartouche femelle (1) selon la revendication 6, **caractérisée en ce que** ledit poussoir (35) comprend une rainure longitudinale (35a) adaptée pour permettre l'insertion de ladite came (310) dans ladite rainure.

8. Cartouche femelle (1) selon l'une des revendications 1 à 7, **caractérisée en ce qu'**elle comprend en outre une bride (la) accouplée audit corps de bille (2) dotée d'une fonction d'élément de protection contre la saleté.

9. Système comprenant un bloc de support (100), dans lequel au moins une cartouche femelle (1) selon l'une quelconque des revendications 1 à 8 est insérée, ladite cartouche femelle étant accouplable à un raccord mâle à face plate (200) conforme à la norme ISO 16028.
